# EUROPÄISCHE PATENTSCHRIFT

(11) **EP 2 620 085 B1**
(45) Veröffentlichungstag und Bekanntmachung des Hinweises auf die Patenterteilung: **18.05.2016**
(21) Anmeldenummer: 13151931.6
(22) Anmeldetag: 18.01.2013
(51) Int. Cl.: A47J 31/52

(54) **Anzeigevorrichtung für ein Anwenderprogrammauswahlmenü einer Heißgetränkemaschine**
Display device for a user program selection menu of a hot beverage machine
Dispositif d'affichage pour un menu de sélection de programme d'utilisation d'une machine pour boissons chaudes

(30) Priorität: 24.01.2012 DE 102012200947
(43) Veröffentlichungstag der Anmeldung: 31.07.2013
(73) Patentinhaber: BSH Hausgeräte GmbH, 81739 München (DE)
(72) Erfinder: Brunner, Andreas, 83278 Traunstein (DE); Ewender, Johannes, 83346 Bergen (DE); Schneiderbauer, Gottfried, 84553 Halsbach (DE); Stief, Peter, 83329 Waging am See (DE)

(56) Entgegenhaltungen:
- WO-A1-2006/050563
- WO-A1-2010/010587

## Beschreibung

Die Erfindung betrifft eine Heißgetränkemaschine mit einer Mehrzahl von Anwenderprogrammen, umfassend eine Anzeigevorrichtung für ein Auswahlmenü für Anwenderprogramme, ein Verfahren zur Anzeige eines Auswahlmenüs für Anwenderprogramme im Betrieb einer Heißgetränkemaschine sowie die Verwendung eines solchen Verfahrens zur Anzeige eines Auswahlmenüs für Anwenderprogramme in einer Datenverarbeitungsvorrichtung für den Betrieb einer Heißgetränkemaschine, insbesondere eines Espresso- oder Kaffeevollautomaten.

Bei manchen herkömmlichen Espresso- oder Kaffeevollautomaten kann der Anwender verschiedene Betriebs- und Service-Programme über ein Auswahlmenü abrufen. Die aktuelle Siemens-Baureihe "EQ.7" besitzt zum Beispiel zwölf Programme, nämlich einfacher und doppelter Kaffee, einfacher oder doppelter Espresso, diverse Milchgetränke, personalisiertes MyCoffee-Programm und ein Reinigungsprogramm für das Milchsystem. In Zukunft soll die Programmpalette noch ausgeweitet werden, z. B. durch "neue" Milchgetränke, mehrere individuell personalisierbare MyCoffee-Programme oder auch weitere Serviceprogramme.

Die Auswahl des gewünschten Programms erfolgt in der aktuellen Siemens-Baureihe über ein Auswahlmenü, in welchem mittels Scrollen durch die gesamte Programmpalette das betreffende Programm ausgewählt wird. Hierbei werden auf dem Display aktuell sechs Programme angezeigt, wobei die übrigen, d.h. die von dem aktuellen Programm weiter entfernten Programme außerhalb des Anzeigebereichs des Displays liegen. Der Anwender weiß anhand des aktuell ausgewählten Programms und der um dieses Programm herum angezeigten Programme weder welche weiteren Programme verfügbar sind, noch in welcher Richtung die nicht angezeigten Programme liegen, d.h. in welche Richtung des Anzeigemenüs er scrollen muss, um das gewünschte Programm auswählen zu können.

Die WO 2010/010587 A1 offenbart eine Maschine zur Ausgabe von Kaffee, die dadurch gekennzeichnet ist, dass eine Steuereinheit zum Assoziieren eines kundenspezifischen Menüs mit wenigstens einem Benutzer, der von dem Wiedererkennungssystem wiedererkannt wird; dass für jedes der Getränke, die in dem kundenspezifischen Menü vorhanden sind, von dem Benutzer ein oder mehrere Lieferparameter eingestellt werden; und dass die genannte Maschine derart programmiert wird, dass sie das kundenspezifische Menü anzeigt und einen Befehl des Benutzers braucht zum Selektieren des gewählten Getränks aus dem kundenspezifischen Menü. Die WO2006/050563 A1 offenbar eine Kaffeemaschine, die eine Elektronik aufweist, die eine Lokal- oder eine Fernüberwachung der Maschinenparameter gewährleistet. Auch aus der WO 2011/147821 A1 und der EP 1 909 623 B1 sind gattungsgemäße Heißgetränkemaschinen bekannt, die Anzeigevorrichtungen zum Anzeigen einer Auswahl an Getränken oder Einstellungen umfassen.

Aufgabe der Erfindung ist es, dem Anwender einer Heißgetränkemaschine der eingangs genannten Art eine übersichtlichere Art der Darstellung des Programm-Auswahlmenüs an die Hand zu geben und eine vereinfachte und insbesondere schnellere Auswahl der Programme zu ermöglichen.

Diese Aufgabe wird bei einer Heißgetränkemaschine der eingangs genannten Art dadurch gelöst, dass sie neben einer Anzeigevorrichtung für ein Auswahlmenü für Anwenderprogramme die folgenden Vorrichtungen umfasst:
- eine Erfassungsvorrichtung zur Bestimmung der Häufigkeit von Aufrufen eines bestimmten Anwenderprogramms
- eins Bestimmungsvorrichtung zur Bestimmung von mehreren in einem Auswahlmenü darstellbarer Anwenderprogrammen,
- eine Festlegungsvorrichlung zur Festlegung einer Reihenfolge der bestimmten Anwenderprogramme, und
- eine Darstellungsvorrichtung zur Darstellung einer Anzahl der bestimmten Anwenderprogramme in der festgelegten Reihenfolge in einem Auswahlmenü der Anzeigevorrichtung.

Die Bestimmungsvorrichtung bestimmt diejenigen Anwenderprogramme, die in einem Auswahlmenü darstellbar sein sollen, und zwar entweder nach Vorauswahl durch den Anwender oder selbsttätig aufgrund vorgegebener Einstellungen und/oder ermittelter Daten. Erfingdungsgemäß werden mehrere, d.h. zwei oder mehr und insbesondere 4 bis 8 Anwenderprogramme bestimmt bzw. ausgewählt. Bisher wurden in den herkömmlichen Maschinen alle Anwenderprogramme zur Auswahl angeboten. Durch die Bestimmung einer Anzahl von darstellbaren Anwenderprogrammen wird in der erfindungsgemäßen Heißgetränkemaschine eine erhöhte Übersichtlichkeit des Auswahlmenüs erzielt, weil nur noch eine bestimmte Anzahl an Anwenderprogrammen dem Anwender angeboten wird. Dadurch wird eine vereinfachte und schnellere Auswahl der Programme durch den Anwender im Betrieb ermöglicht. Die Bestimmungsvorrichtung kann dem Anwender die Möglichkelt bieten, mehrere Programme selbst auszuwählen, festzulegen bzw. zu programmieren, welche in einem Auswahlmenü darstellbar sein sollen und welche er nicht dargestellt haben will, weil er beispielsweise diese Anwendung nicht wünscht. Die Bestimmungsvorrichtung kann die Zusammenstellung des Auswahlmenüs alternativ selbsttätig aufgrund von Werksteinstellungen und/oder auf der Basis von Daten generieren, die während der Benutzung der Heißgetränkemaschine ermittelt werden.

Die Festlegungsvorrichtung dient zur Feststellung bzw. Festlegung einer Reihenfolge der durch die Bestimmungsvorrichtung bestimmten Anwenderprogramme bzw. der vorbestimmten Anwenderprogramme. Die Festlegung der Reihenfolge erfolgt bevorzugt nach vorbe stimmten bzw. vom Anwender auszuwählenden Kriterien. Dadurch wird eine feste Position der Programme im Auswahlmanü, wie es bisher in den herkömmlichen Heißgetränkemaschinen festgelegt war, aufgehoben, so dass eine einfachere Sortierung bzw. Platzierung im Auswahlmenü im Betrieb einer Heißgetränkemaschine durchgeführt werden kann. Erfolgt die Bestimmung anhand von Daten, die während der Benutzung der Heißgetränkemaschine ermittelt werden, kann die Festlegungsvorrichtung die Reihenfolge ggf. ändern, Dadurch kann eine dynamische Anpassung an das Nutzerverhalten erzielt werden.

Eine Festlegung der Reihenfolge kann entbehrlich sein, wenn bei der Bestimmung der Anwenderprogramme schon eine Reihenfolgebestimmung oder eine Auswahl aus einer festgelegten Reihenfolge erfolgt. Die Bestimmungevorrichtung und die Feststellungsvorrichtung sind dann in einer Vorrichtung mit beiden Funktionalltäten zusammengefasst.

Die Darstellungsvorrichtung stellt dle ausgewählten Anwenderprogramme in der festgelegten Reihenfolge in dem Auswahlmenü der Anzeigevorrichtung dar. Hierbei können je nach Platzangebot in dem Auswahlmenü und je nach Anzahl der bestimmten Programme alle ausgewählten Anwenderprogramme oder, falls der Platz nicht ausreichen sollte, nur eine Anzahl der ausgewählten bzw. bestimmten Anwenderprogramme im sichtbaren Bereich der Anzeigevorrichtung dargestellt werden. Die In der Anzeigevorrichtung im sichtbaren Bereich dargestelten Anwenderprogramme sind dabel die Programme, die bei der Bestimmung der Programme bzw. der Festlegung der Reihenfolge dle höchste Priorität erhalten haben. Dadurch kann der Anwender schneller auf die gewünschten Programme zugreifen und muss nicht in dem Auswahlmenü langwierig nach seinem gewünschten Programm suchen.

Nach einer vorteilhaften Ausgestaltung der erfindungsgemäßen Heißgetränkemaschine umfasst sie zusätzlich einen Anwenderprogrammspeicher zur Speicherung der mit der Bestimmungsvorrichtung bestimmten Anwenderprogramme. Der Anwenderprogrammspeicher kann für mehrere Anwender zusammen eine universelle Speicherung aller gewünschten Programme vornehmen bzw. kann für jeden Anwender eine persönliche Speicherung durchführen. Falls eine persönliche bzw. personenbezogene Speicherung durchgeführt wird, kann die Erkennung des Anwenders über ein Registrierungsmodul, zum Beispiel einen Kartenleser oder über ein Auswahl-Hauptmenü usw. erfolgen, Dadurch kann die Anzeigevorrichtung individualisiert werden, so dass sie dem Anwender eine vereinfachte Programmauswahl ermöglicht, Insbesondere das Unterdrücken bzw. Ausblenden von nicht bevorzugten oder nur selten benutzten Anwenderprogrammen aus dem sichtbaren Bereich des Auswahlmenüs ermöglicht einen schnelleren Zugriff auf die gewünschten Anwenderprogramme.

Die erfindungsgemäße Heißgetränkemaschine umfasst eine Erfassungsvorrichtung zum Erfassen der Häufigkeit von Aufrufen eines bestimmten Anwenderprogramms. Das Erfassen erfolgt summarisch über alle Anwendungen. Die erfasste Häufigkeit stellt ein Kriterium für die Bestimmungsvorrichtung dar, nach dem sie ein Anwenderprogramm für die Anzeige in dem Auswahlmenü bestimmt, oder für die Festlegungsvorrichtung, nach dem die Position eines Anwenderprogramms in einer Reihenfolge festgelegt wird. So kann in Abhängigkeit vom Benutzerverhalten die Positionierung der Programme im Auswahlmenü selbsttätig und dynamisch erfolgen, weil ein sich änderndes Benutzungsverhalten zu einer neuen Bestimmung und/oder Reihenfolge führen kann. Zum Beispiel kann die Positionierung in Abhängigkeit von der Häufigkeit der Aufrufe dazu führen, dass häufig verwendete Programme in dem Auswahlmenü nebeneinander angezeigt, d. h. bei der Festlegung der Reihenfolge als benachbarte Programme festgelegt werden. So ist es möglich, dass selten oder nie verwendete Programme in der Programmreihenfolge weiter entfernt von den häufig verwendeten Programmen festgelegt werden und somit abseits oder gar nicht im sichtbaren Bereich der Anzeige, d.h. nur in einem virtuellen bzw. ausgeblendeten Anzeigebereich, angezeigt werden.

Die Festlegungsvorrichtung kann die Positionierung der Anwenderprogramme im Auswahlmenü durch eine entsprechende Festlegung der Reihenfolge bzw. Priorität auf Basis der Anwendereingaben oder selbsttätig, zum Beispiel auf Grund des Gerätezustands, durchführen. Der Gerätezustand kann zum Beispiel vom Verschmutzungsgrad, vom Verkalkungsgrad vom Mahlgrad, von der Brühtemperatur oder auch vom Abnutzungsgrad einzelner Komponenten abhängen.

Eine Heißgetränkemaschine nach einer weiteren vorteilhaften Ausführungsform umfasst einen Speicher für eine Anzahl der zuletzt aufgerufenen Anwenderprogramme. Somit ist eine Positionierung in Abhängigkeit von der letzten Verwendung der Heißgetränkemaschine möglich. Zum Beispiel wird das jeweils zuletzt verwendete Programm an eine feste Position in der Reihenfolge der Anwenderprogramme gestellt, zum Beispiel an die erste Position, während die anderen in gleichbleibender Position verschoben werden. In dem Speicher kann die daraus ermittelte Reihenfolge der Anwenderprogramme abgespeichert und für die nächste Nutzung verwendet werden. Die Verwendung des Speichers ermöglicht dadurch zum Beispiel, dass sich häufig verwendete Programme gruppieren lassen, während selten oder nie verwendete Programme abseits verschoben werden.

Die vorstehende Aufgabe der Erfindung wird auch durch ein Verfahren zur Anzeige eines Auswahlmenüs für Anwenderprogramme im Betrieb einer Heißgetränkemaschine mit den folgenden Schritten gelöst:
a) Bestimmen der summarisch über alle Anwendungen erfassten Häufigkeit von Aufrufen eines bestimmten Anwenderprogramms, die ein Kriterium für die Bestimmungsvorrichtung (3) darstellt, nach dem sie ein Anwenderprogramm für die Anzeige in dem Auswahlmenü bestimmt, oder für die Festlegungsvorrichtung (5), nach dem die Position eines Anwenderprogramms in einer Reihenfolge festgelegt wird,
b) Bestimmen mehrerer in einem Auswahlmenü darstellbarer Anwenderprogramme,
c) Festlegen einer Reihenfolge der bestimmten Anwenderprogramme, und
d) Darstellen einer Anzahl der bestimmten Anwenderprogramme in der festgelegten Reihenfolge in einem Auswahlmenü der Anzeigevorrichtung.

Durch das erfindungsgemäße Verfahren kann die Positionierung oder Markierung der Programme im Auswahlmenü in Abhängigkeit vom Gerätezustand oder nach den Wünschen des Anwenders vorgenommen werden. Insbesondere sind die Anzahl der Programme und/oder die Position der Programme im Auswahlmenü nicht mehr festgelegt, sondern sind flexibel bzw. können automatisch oder durch den Anwender entsprechend gesteuert werden. Dadurch wird für den Anwender die Auswahl des gewünschten Programms vereinfacht und häufig auch beschleunigt.

So kann der Anwender in einer bevorzugten Ausführungsform des Verfahrens selbst einstellen bzw. programmieren, welche Programme im Auswahlmenü dargestellt werden und welche nicht. Der Anwender kann sie nach dem Bestimmen in einem Anwenderprogrammspeicher als Anwenderprofil manuell abspeichern lassen und optional bei Bedarf aus dem Speicher der Heißgetränkemaschine abrufen. Beispielsweise kann der Anwender die Position der Programme im Auswahlmenü einstellen bzw. programmieren und im Anwenderprogrammspeicher so abspeichern, dass häufig verwendete Programme in der Reihenfolge der angezeigten Anwenderprogramme nebeneinanderliegen können.

In einer weiteren bevorzugten Ausführungsform umfasst das erfindungsgemäße Verfahren im Schritt c), nämlich der Festlegung der Reihenfolge der Anwenderprogramme, dass die während einer bestimmten Zeitdauer nicht benutzten Anwenderprogrammen in einem separaten Bereich festgelegt bzw. gespeichert werden, der optional aus dem Auswahlmenü ausgeblendet wird. Die Reihenfolge der benutzen Anwenderprogramme wird dabei bevorzugt gleich belassen, so dass sie für den Anwender in der üblichen Reihenfolge in dem Auswahlmenü erscheinen. Aber auch eine neue Sortierung bzw. Festlegung der Reihenfolge der benutzten Programme kann zweckmäßig sein. So können die häufig verwendeten Anwenderprogramme an einer bevorzugten Position im Auswahlmenü bzw. in der Anzeige der Heißgetränkemaschine so platziert werden, dass sie vom Anwender im Betrieb schnell anwählbar sind. Dadurch wird das Verfahren der Auswahl eines speziellen Anwenderprogramms vereinfacht und beschleunigt, wodurch die Anwenderfreundlichkeit einer solchen Heißgetränkemaschine verbessert wird.

Die ermittelte Reihenfolge der Anwenderprogramme kann in einem allgemeinen Anwendungsspeicher oder in individuellen Anwenderprofilen abgespeichert werden.

Wenn die Festlegung der Reihenfolge der Anwenderprogramme im Schritt b) selbsttätig erfolgt, ist es bevorzugt, dass die während einer bestimmten Zeitdauer nicht benutzten Anwenderprogramme in einem Bereich gespeichert werden, der aus dem Auswahlmenü ausgeblendet wird. Nach einer gewissen Zeitdauer werden somit nur noch die benutzten Programme im Auswahlmenü angezeigt, wobei ausgeblendete Programme zum Beispiel durch den Anwender durch Benutzung aktiviert oder durch eine entsprechende Einstellung im Auswahlmenü wieder reaktiviert werden können. Dies hat eine Vereinfachung des Auswahlmenüs im Betrieb zur Folge, was dem Anwender einen schnellen Zugriff zu dem gewünschten Programm ermöglicht. Die nur selten gewählten Anwenderprogramme können dennoch über eine Einblendung in das Auswahlmenü bzw. durch ein Scrollen ebenso dem Anwender zur Verfügung stehen.

Die Positionierung der Programme im Auswahlmenü, wie vorstehend gezeigt ist, kann durch das erfindungsgemäße Verfahren in Abhängigkeit vom Benutzerverhalten vorgenommen werden. So kann beispielsweise eine Positionierung in Abhängigkeit von der Häufigkeit der Aufrufe einer Anwendung in der Art und Weise erfolgen, dass häufiger verwendete Anwenderprogramme gebündelt werden. Zum Beispiel können diese im Auswahlmenü in der Reihenfolge ihrer Häufigkeit hierarchisch angeordnet werden. Alternativ dazu kann eine Bündelung der häufiger benutzten Anwenderprogramme erreicht werden, wenn sie nebeneinanderliegend in dem Auswahlmenü angeordnet werden, während selten oder gar nicht verwendete Programme von diesem Bündel abseits im Auswahlmenü angezeigt werden.

Alternativ kann das zuletzt verwendete Anwenderprogramm an einer bestimmten Position im Auswahlmenü gespeichert und die Reihenfolge der übrigen Anwenderprogramme nicht verändert werden. Dadurch lassen sich verwendete Programme zu einer bevorzugten Gruppe im Auswahlmenü zusammen gruppieren, während selten oder gar nicht verwendete Programme an eine Position im Auswahlmenü verschoben werden, die abseits liegt bzw. nicht in der Anzeige der Anzeigevorrichtung erscheint.

In einer bevorzugten Ausführungsform der erfindungsgemäßen Verfahren werden im Schritt der Festlegung der Reihenfolge in Abhängigkeit des Gerätezustands zweckmäßige Anwenderprogramme, bevorzugt Serviceprogramme, an einer bestimmten Position im Auswahlmenü gespeichert. Serviceprogramme sind zum Beispiel Spül-, Reinigungs- oder Entkalkungsprogramme, die gewöhnlich in festgelegten Intervallen bzw. zu festgelegten Zeitpunkten, zum Beispiel beim Ein- bzw. Ausschalten des Geräts oder nach einer längeren Pause durchgeführt werden sollten. So können wichtige Serviceprogramme in der Menüauswahl markiert oder an die erste Stelle bzw. in den Fokus des Anwenders gestellt werden, wenn sie ausgeführt werden sollen. Zum Beispiel kann nach dem Bezug eines Getränks mit Milch das Programm "Kurzspülen Milchsystem" an erster Stelle oder im Fokus des Anwenders stehen. Wenn zum Beispiel eine Entkalkung erforderlich ist, kann das Entkalkungsprogramm an erster Stelle oder im Fokus stehen.

Optional können andere Anwenderprogramme, zum Beispiel solche, die den Bezug einer Kaffeeportion ermöglichen, aus dem Auswahlmenü bzw. der Anzeigevorrichtung ganz oder teilweise ausgeblendet werden, so dass das Serviceprogramm zwangsweise ausgeführt werden muss, bevor ein neuer Kaffeebezug möglich ist. Dies erhöht die Zuverlässigkeit der Heißgerätemaschine und verbessert durch eine regelmäßige Reinigungsleistung auch die Getränkequalität, da Verschmutzungen und Verkalkungen regelmäßig entfernt werden. Dadurch kann auch der Geschmack trotz häufigem Gebrauch auf einer gleichmäßig hohen Qualität gehalten werden.

Ähnlich können auch solche Programme, die temporär oder über eine längere Zeitdauer nicht möglich sind, zum Beispiel aufgrund des Fehlens eines Inhaltsstoffs oder des Defekts einer Einheit der Heißgetränkemaschine, im Menü ausgeblendet oder als inaktiv gekennzeichnet werden. Zum Beispiel kann man durch Ändern der Anzeigefarbe, ein so genanntes "Ausgrauen", oder durch Durchstreichen des Anwenderprogramms ein interaktives Programm kennzeichnen. Wenn zum Beispiel keine Bohnen mehr im Bohnenbehälter sind, können alle Programme mit Kaffee im Menü durchgestrichen werden. Dann kann der Anwender zum Beispiel nur noch Heißwasser, diverse Milchgetränke oder Serviceprogramme anwählen. Alternativ können diese inaktiven Programme auch ganz aus dem Auswahlmenü ausgeblendet werden.

Durch alle vorstehend aufgeführten Ausführungsformen des erfindungsgemäßen Verfahrens kann das Auswahlmenü übersichtlicher gestaltet werden. Dadurch ist auch ein schnellerer Zugriff des Anwenders auf das gewünschte Programm möglich, insbesondere weil selten oder nicht verwendete Programme nicht mehr angezeigt werden. Sie müssen beim Suchen des gewünschten Programms nicht mehr durchgescrollt werden. Wenn häufig verwendete Programme nebeneinanderliegen bzw. gebündelt worden sind, kann durch diese Maßnahmen eine Auswahl durch den Anwender in der Regel schneller erfolgen, da er nicht mehr oder nur noch selten durch die nicht verwendeten Programme bei der Auswahl scrollen muss. Damit wird insgesamt die Bedienung des Gerätes komfortabler und intuitiver.

Die vorstehende Aufgabe der Erfindung wird außerdem durch die Verwendung des erfindungsgemäßen Verfahrens in einer Datenverarbeitungsvorrichtung für den Betrieb einer Heißgetränkemaschine gelöst.

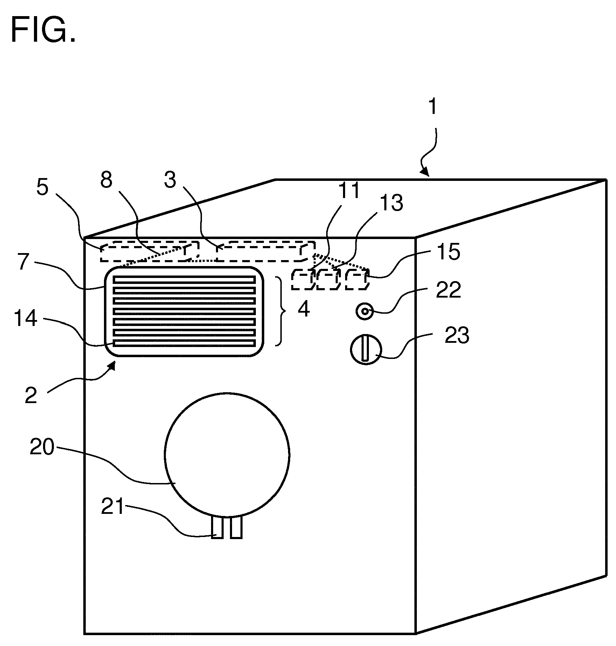

Das Prinzip der Erfindung wird im Folgenden an Hand einer Zeichnung beispielshalber noch näher erläutert. In der Zeichnung ist eine erfindungsgemäße Heißgetränkemaschine mit einer Mehrzahl von Anwenderprogrammen und einer Anzeigevorrichtung für ein Auswahlmenü für diese Anwenderprogramme gezeigt.

In der Figur ist schematisch eine Heißgetränkemaschine 1 mit einer elektronischen Anzeigevorrichtung 2, nämlich einem digitalen Display, einem Brühkammerausgang 20 mit einem doppelten Getränkeauslauf 21, einem Einschaltknopf 22 und einem Auswahlknopf 23 gezeigt. Die Anzeigevorrichtung 2 verfügt weiterhin über eine Darstellungsvorrichtung 7 zur Darstellung einer Anzahl von Anwenderprogrammen 14 in einem Auswahlmenü 4. In der Heißgetränkemaschine 1 sind die Anwenderprogramme 14 in Form von Text, in der Figur als Zeilen skizziert, untereinander in dem Auswahlmenü 4 angezeigt. Alternativ können auch Symbole in einer Reihen- oder Matrixanordnung in der Anzeigevorrichtung 2 dargestellt werden.

Im Innerm der Heißgetränkemaschine 1 sind eine Bestimmungsvorrichtung 3 und eine Festlegungsvorrichtung 5 angedeutet, in denen die Schritte des erfindungsgemäßen Verfahrens zur Anzeige eines Auswahlmenüs 4, die vor der Darstellung in der Anzeigevorrichtung 7 liegen, durchgeführt werden. Ebenso sind im Innern der Heißgetränkemaschine 1 ein Zähler als Erfassungsvorrichtung 11, ein Anwenderprogrammspeicher 13 und ein Speicher 15 vorgesehen, in denen bestimmte Verfahrensschritte durchgeführt werden bzw. bestimmte Zustände wie zum Beispiel eine individualisierte Anzeige für das Auswahlmenü 4 gespeichert sind. Alternativ können mehrere Zähler, Anwenderprogrammspeicher oder Speicher vorhanden sein, um personalisierte Speicherlösungen bzw. Programmfunktionen zu ermöglichen.

Die Bestimmungsvorrichtung 3, die Festlegungsvorrichtung 5, die Darstellungsvorrichtung 7 und der Zähler 11, der Anwenderprogrammspeicher 13 und der Speicher 15 sind alle miteinander elektrisch verbunden, zum Beispiel über Leiterplatinen oder Kabel 8, so dass die entsprechenden Verfahrensschritte wie die Speicherung von individuellen Programmen bzw. von Zwischenzuständen von den einzelnen Einrichtungen elektronisch gesteuert durchgeführt werden können. Für die Durchführung des erfindungsgemäßen Verfahrens kann auch eine Datenverarbeitungsvorrichtung, wie zum Beispiel ein Mikroprozessor oder eine Computereinheit (in der Figur nicht gezeigt), in der Heißgetränkemaschine 1 integriert sein, welche das Verfahren zur Anzeige eines Auswahlmenüs für Anwenderprogramme gemäß der vorliegenden Erfindung steuert. Eine Datenverarbeitungsvorrichtung kann die Bestimmungsvorrichtung 3, die Festlegungsvorrichtung 5 bzw. den Zähler 11, den Anwenderprogrammspeicher 13, oder den Speicher 15 integriert umfassen.

Die Bestimmungsvorrichtung 3 bestimmt als erstes die in dem Auswahlmenü 4 darstellbaren Anwenderprogramme 14, zum Beispiel durch Auslesen von voreingestellten Werten aus dem Speicher 15. Alternativ kann auch eine manuelle Eingabe durch den Anwender in diesen Schritt erfolgen. Die Bestimmungsvorrichtung 3 gibt die bestimmten Anwenderprogramme 14 an die Festlegungsvorrichtung 5 weiter. Diese wiederum legt eine Reihenfolge der bestimmten Anwenderprogramme 14 auf Basis von im Zähler 11 hinterlegten Werten fest. Die im Zähler 11 hinterlegten Werte können die Häufigkeit der Anwendung eines bestimmten Anwenderprogramms 14 sein. Das am häufigsten angewendete Anwenderprogramm 14 wird dabei an die erste Stelle des Auswahlmenüs 4 gesetzt. Das am zweithäufigsten angewendete Anwenderprogramm 14 wird dabei an die zweite Stelle des Auswahlmenüs 4 gesetzt, usw. somit ergibt sich ein Auswahlmenü 4 mit nach der Häufigkeit der Anwendung festgelegter Reihenfolge der Anwenderprogramme 14. Dabei sind die nicht so häufig benutzten Anwenderprogramme im unteren Bereich des Auswahlmenüs 4 bzw. sogar außerhalb des Auswahlmenüs 4, so dass sie gar nicht mehr durch die Darstellungsvorrichtung 7 angezeigt werden.
Dies erlaubt dem Anwender einen schnellen Zugriff auf die häufig benutzten Anwenderprogramme 14, was eine Erleichterung der Bedienung der erfindungsgemäßen Heißgetränkemaschine 1 ist. Durch das vorstehend beschriebene Beispiel einer erfindungsgemäßen Heißgetränkemaschine und eines darin angewendeten erfindungsgemäßen Verfahrens wird die gesamte Bedienung der Heißgetränkemaschine komfortabler und intuitiver.

Da es sich bei der vorhergehend, detailliert beschriebenen Heißgetränkemaschine um ein Ausführungsbeispiel handelt, kann sie in üblicher Weise vom Fachmann in einem weiten Umfang modifiziert werden, ohne den Bereich der Erfindung zu verlassen. Insbesondere kann auch die konkrete Ausgestaltung der Anzeigevorrichtung in anderer Form als in der hier beschriebenen erfolgen. Zum Beispiel können die Anwenderprogramme als Piktogramme oder Symbole in der Anzeigevorrichtung angezeigt werden. Die Anordnung kann auch in einer Matrix mit mehreren Reihen uns Spalten erfolgen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Heißgetränkemaschine
- 2: Anzeigevorrichtung
- 3: Bestimmungsvorrichtung
- 4: Auswahlmenü
- 5: Festlegungsvorrichtung
- 7: Darstellungsvorrichtung
- 8: Kabel
- 11: Zähler
- 13: Anwenderprogrammspeicher
- 14: Anwenderprogramm
- 15: Speicher
- 20: Brühkammerausgang
- 21: Getränkeauslauf
- 22: Einschaltknopf
- 23: Auswahlknopf

## Patentansprüche

1. Heißgetränkemaschine (1) mit einer Mehrzahl von Anwenderprogrammen, umfassend:
- eine Anzeigevorrichtung (2) für ein Auswahlmenü (4) für Anwenderprogramme (14),
- eine Erfassungsvorrichtung (11) zur Bestimmung der summarisch über alle Anwendungen erfassten Häufigkeit von Aufrufen eines bestimmten Anwenderprogramms (14),
- eine Bestimmungsvorrichtung (3) zur Bestimmung von mehreren in einem Auswahlmenü (4) darstellbarer Anwenderprogrammen (14),
- eine Festlegungsvorrichtung (5) zur Festlegung einer Reihenfolge der bestimmten Anwenderprogramme, und
- eine Darstellungsvorrichtung (7) zur Darstellung einer Anzahl der bestimmten Anwenderprogramme (14) in der festgelegten Reihenfolge in einem Auswahlmenü (4) der Anzeigevorrichtung (2),
**dadurch gekennzeichnet, dass** die erfasste Häufigkeit ein Kriterium für die Bestimmungsvorrichtung (3) darstellt, nach dem sie ein Anwenderprogramm für die Anzeige in dem Auswahlmenü (4) bestimmt, oder für die Festlegungsvorrichtung (5), nach dem die Position eines Anwenderprogramms in einer Reihenfolge festgelegt wird.

2. Heißgetränkemaschine nach Anspruch 1, mit einem Anwenderprogrammspeicher (13) zur Speicherung der mit der Bestimmungsvorrichtung bestimmten Anwenderprogramme (14).

3. Verfahren zur Anzeige eines Auswahlmenüs (4) für Anwenderprogramme (14) im Betrieb einer Heißgetränkemaschine (2), umfassend die Schritte:
- Bestimmen der summarisch über alle Anwendungen erfassten Häufigkeit von Aufrufen eines bestimmten Anwenderprogramms (14), die ein Kriterium für die Bestimmungsvorrichtung (3) darstellt, nach dem sie ein Anwenderprogramm für die Anzeige in dem Auswahlmenü bestimmt, oder für die Festlegungsvorrichtung (5), nach dem die Position eines Anwenderprogramms in einer Reihenfolge festgelegt wird,
- Bestimmen mehrerer in einem Auswahlmenü (4) darstellbarer Anwenderprogramme (14),
- Festlegen einer Reihenfolge der bestimmten Anwenderprogramme (14), und
- Darstellen einer Anzahl der bestimmten Anwenderprogramme (14) in der festgelegten Reihenfolge in einem Auswahlmenü (4) der Anzeigevorrichtung (2).

4. Verfahren nach Anspruch 3, **dadurch gekennzeichnet, dass** der Anwender nach dem Bestimmen der Anwenderprogramme (14) diese in einem Anwenderprogrammspeicher (13) manuell abspeichert.

5. Verfahren nach Anspruch 3 oder 4, wobei im Schritt der Festlegung der Reihenfolge diese so festgelegt wird, dass die eine bestimmte Zeit nicht benutzten Anwenderprogramme (14) in einem separaten Bereich gespeichert werden, der optional aus dem Auswahlmenü (4) ausgeblendet wird.

6. Verfahren nach einem der Ansprüche 3 bis 5, wobei im Schritt der Festlegung der Reihenfolge diese auf Basis der Häufigkeit der Anwendungen so festgelegt wird, dass die häufiger verwendeten Anwenderprogramme (14) gebündelt werden

7. Verfahren nach einem der Ansprüche 3 bis 6, wobei im Schritt der Festlegung der Reihenfolge das zuletzt verwendete Anwenderprogramm (14) an einer bestimmte Position im Auswahlmenü (4) gespeichert wird und die Reihenfolge der übrigen Anwenderprogramme (14) nicht verändert wird.

8. Verfahren nach einem der Ansprüche 3 bis 7, wobei im Schritt der Festlegung der Reihenfolge in Abhängigkeit des Gerätezustands zweckmäßige Anwenderprogramme (14) an einer bestimmten Position im Auswahlmenü (4) gespeichert werden.

9. Verwendung eines in den Ansprüchen 3 bis 8 beanspruchten Verfahrens zur Anzeige eines Auswahlmenüs für Anwenderprogramme in einer Datenverarbeitungsvorrichtung für den Betrieb einer Heißgetränkemaschine (1).

## Claims

1. Hot beverage machine (1) having a plurality of user programs, comprising:
- a display device (2) for a selection menu (4) for user programs (14),
- a sensing device (11) for determining the frequency with which a determined user program (14) sensed collectively across all applications is called up,
- a determination device (3) for determining a number of user programs (14) which can be represented in a selection menu (4),
- a setting device (5) for setting a sequence of determined user programs, and
- a representation device (7) for representing a number of determined user programs (14) in the sequence set in a selection menu (4) of the display device (2),
**characterised in that** the sensed frequency represents a criterion for the determination device (3), according to which it determines a user program to be displayed in the selection menu (4), or for the setting device (5), according to which the position of a user program in a sequence is set.

2. Hot beverage machine according to claim 1, having a user program memory (13) for storing the user programs (14) determined with the determination device.

3. Method for displaying a selection menu (4) for user programs (14) during operation of a hot beverage machine (2), comprising the steps:
- determining the frequency with which a determined user program (14) sensed collectively across all applications is called up, which represents a criterion for the determination device (3), according to which it determines a user program to be displayed in the selection menu, or for the setting device (5), according to which the position of a user program in a sequence is set,
- determining a number of user programs (14) which can be represented in a selection menu (4),
- setting a sequence of determined user programs (14), and
- representing a number of determined user programs (14) in the sequence set in a selection menu (4) of the display device (2).

4. Method according to claim 3, **characterised in that** after determining the user programs (14), the user manually stores these in a user program memory (13).

5. Method according to claim 3 or 4, wherein in the step of setting the sequence, this is set such that the user programs (14) which have not been used for a certain amount of time are stored in a separate area, which is optionally hidden from the selection menu (4).

6. Method according to one of claims 3 to 5, wherein in the step of setting the sequence, this is set on the basis of the frequency of use such that the frequently-used user programs (14) are bundled.

7. Method according to one of claims 3 to 6, wherein in the step of setting the sequence, the user program (14) used last is stored at a certain position in the selection menu (4) and the sequence of the remaining user programs (14) is unchanged.

8. Method according to one of claims 3 to 7, wherein in the step of setting the sequence as a function of the device state, expedient user programs (14) are stored at a certain position in the selection menu (4).

9. Use of a method claimed in claims 3 to 8 for displaying a selection menu for user programs in a data processing device for operation of a hot beverage machine (1).

## Revendications

1. Machine pour boissons chaudes (1) dotée d'une pluralité de programmes utilisateur, comprenant :
- un dispositif d'affichage (2) pour un menu de sélection (4) pour des programmes utilisateur (14),
- un dispositif de saisie (11) destiné à déterminer la fréquence d'appels, saisie globalement sur toutes les applications, d'un programme utilisateur déterminé (14),
- un dispositif de détermination (3) destiné à déterminer plusieurs programmes utilisateur (14) représentables dans un menu de sélection (4),
- un dispositif d'établissement (5) destiné à établir un ordre des programmes utilisateur déterminés, et
- un dispositif de représentation (7) destiné à représenter un nombre des programmes utilisateur déterminés (14) dans l'ordre établi dans un menu de sélection (4) du dispositif d'affichage (2),
**caractérisée en ce que** la fréquence saisie représente un critère pour le dispositif de détermination (3), selon lequel il détermine un programme utilisateur pour l'affichage dans le menu de sélection (4), ou pour le dispositif d'établissement (5), selon lequel la position d'un programme utilisateur est établie dans un ordre.

2. Machine pour boissons chaudes selon la revendication 1, comprenant une mémoire de programmes utilisateur (13) destinée à mettre en mémoire les programmes utilisateur (14) déterminés à l'aide du dispositif de détermination.

3. Procédé d'affichage d'un menu de sélection (4) pour des programmes utilisateur (14) pendant le fonctionnement d'une machine pour boissons chaudes (2), comprenant les étapes :
- détermination de la fréquence d'appels, saisie globalement sur toutes les applications, d'un programme utilisateur déterminé (14), laquelle représente un critère pour le dispositif de détermination (3), selon lequel il détermine un programme utilisateur pour l'affichage dans le menu de sélection, ou pour le dispositif d'établissement (5), selon lequel la position d'un programme utilisateur est établie dans un ordre,
- détermination de plusieurs programmes utilisateur (14) représentables dans un menu de sélection (4),
- établissement d'un ordre des programmes utilisateur déterminés (14), et
- représentation dans un menu de sélection (4) du dispositif d'affichage (2) d'un nombre des programmes utilisateur déterminés (14) dans l'ordre établi.

4. Procédé selon la revendication 3, **caractérisé en ce que** l'utilisateur, après la détermination des programmes utilisateur (14), mémorise ceux-ci manuellement dans une mémoire de programmes utilisateur (13).

5. Procédé selon la revendication 3 ou 4, dans lequel, à l'étape de l'établissement de l'ordre, celui-ci est établi de manière à ce que les programmes utilisateur (14) non utilisés pendant un temps déterminé soient mémorisés dans une zone séparée qui, en option, est masquée dans le menu de sélection (4).

6. Procédé selon l'une quelconque des revendications 3 à 5, dans lequel, à l'étape de l'établissement de l'ordre, celui-ci est établi sur la base de la fréquence des applications de manière à ce que les programmes utilisateur (14) utilisés plus fréquemment soient regroupés.

7. Procédé selon l'une quelconque des revendications 3 à 6, dans lequel, à l'étape de l'établissement de l'ordre, le programme utilisateur (14) utilisé en dernier est mémorisé à une position déterminée dans le menu de sélection (4) et dans lequel l'ordre des programmes utilisateur (14) restants n'est pas modifié.

8. Procédé selon l'une quelconque des revendications 3 à 7, dans lequel, à l'étape de l'établissement de l'ordre, des programmes utilisateurs (14) appropriés sont mémorisés à une position déterminée dans le menu de sélection (4) en fonction de l'état de l'appareil.

9. Utilisation d'un procédé revendiqué dans les revendications 3 à 8 destiné à l'affichage d'un menu de sélection pour des programmes utilisateur dans un dispositif de traitement des données pour le fonctionnement d'une machine pour boissons chaudes (1).
